# FASCICULE DE BREVET EUROPEEN

(11) **EP 1 227 559 B1**
(45) Date de publication et mention de la délivrance du brevet: **27.07.2011**
(21) Numéro de dépôt: 02075145.9
(22) Date de dépôt: 14.01.2002
(51) Int. Cl.: H02G 3/20

(54) **Agencement d'un dispositif de connexion électrique d'un luminaire encastrable**
Anordnung einer elektrischen Anschlussvorrichtung für eine Einbauleuchte
Arrangement of an electrical connecting device for a built-in lamp

(30) Priorité: 23.01.2001 FR 0100888
(43) Date de publication de la demande: 31.07.2002
(73) Titulaire: Koninklijke Philips Electronics N.V., 5621 BA Eindhoven (NL)
(72) Inventeur: Heutinck, Eric, 75008 Paris (FR); Lavergne, Serge, 75008 Paris (FR)
(74) Mandataire: Roche, Denis

(56) Documents cités:
- EP-A- 0 597 765
- US-A- 4 688 491
- US-A- 5 167 047

## Description

La présente invention concerne l'agencement d'un dispositif de connexion électrique d'un luminaire.

La présente invention concerne plus particulièrement l'agencement d'un dispositif de connexion électrique d'un luminaire, du type dans lequel le luminaire comprend un caisson encastrable, notamment dans un plafond, qui comporte une paroi principale sensiblement plane, un connecteur électrique étant fixé sur la face interne de la paroi principale, en vue de permettre le raccordement électrique du luminaire au réseau d'alimentation.

Généralement, des tubes d'éclairage du type fluorescent sont montés à l'intérieur du caisson, puis ils sont recouverts d'une grille, ou d'une vitre, de protection et de diffusion.

Un câble électrique d'alimentation est passé à travers une lumière de la paroi principale du caisson, puis il est raccordé électriquement au connecteur électrique, ou bornier interne.

Lors de l'installation du luminaire dans un plafond, comme le connecteur électrique est fixé sur la face interne de la paroi principale du caisson, il est nécessaire d'ouvrir le luminaire, c'est-à-dire de démonter la grille, ou la vitre, et les tubes, de manière que l'installateur puisse accéder au connecteur et qu'il puisse y raccorder le câble d'alimentation.

Ce type de raccordement électrique « par l'intérieur » du caisson sera désigné par l'expression « connexion interne ».

La connexion interne des luminaires complique les opérations d'installation du luminaire ce qui empêche une installation rapide et à moindre coût.

Pour résoudre ces problèmes il a été proposé de réaliser le raccordement électrique du luminaire par l'extérieur du caisson.

Ce type de raccordement électrique sera désigné par l'expression « connexion externe ».

Un agencement d'un dispositif de connexion électrique permettant une connexion externe est décrit et représenté dans le document EP-B1-739.070.

Dans ce document, un boîtier contenant un connecteur électrique est fixé sur la face interne de la paroi principale du caisson, en vis-à-vis d'une fenêtre pratiquée dans cette paroi.

Le boîtier comporte un couvercle qui s'étend à l'extérieur du caisson, au travers de la fenêtre, et qui comporte deux lumières pour le passage de deux câbles électriques.

Lorsque l'installateur désire raccorder le luminaire au réseau électrique, il raccorde le câble d'alimentation au connecteur électrique depuis l'extérieur du caisson, puis il referme le couvercle.

Cet agencement ne permet pas de choisir entre une connexion interne et une connexion externe.

Certains luminaires nécessitent de remplacer le connecteur du type à trois plots par un connecteur du type à cinq plots, en vue de permettre son raccordement à deux fils électriques supplémentaires. C'est le cas notamment lorsque le luminaire comporte une fonction de double allumage, c'est-à-dire qu'il comporte plusieurs groupes de tubes d'éclairage qui peuvent fonctionner indépendamment, ou lorsqu'il comporte un dispositif pour faire varier l'intensité de l'éclairage (« dimming »), ou lorsqu'il comporte une fonction d'éclairage de sécurité, c'est-à-dire qu'il est équipé d'une batterie d'alimentation qui lui permet de fonctionner en cas de coupure de courant.

Dans l'agencement réalisé selon l'état de la technique, comme le connecteur est monté à l'intérieur d'un boîtier, le remplacement du connecteur à trois plots par un connecteur à cinq plots nécessite de remplacer tout le boîtier, ou alors de prévoir un boîtier surdimensionné qui accepte de recevoir les deux types de connecteur.

Le montage du connecteur à l'intérieur d'un boîtier est aussi pénalisant pour l'installateur, car il ne dispose que de peu d'espace pour réaliser la connexion électrique du câble d'alimentation dans le connecteur.

De plus, cet agencement nécessite un fil électrique supplémentaire, qui relie le connecteur au caisson du luminaire, en vue de réaliser la liaison électrique du connecteur à la masse.

L'invention vise à remédier à ces inconvénients en proposant un agencement d'un dispositif de connexion électrique qui soit plus facile à installer et qui permette à la fois une connexion interne et une connexion externe, ainsi qu'une plus grande modularité quant au choix du connecteur.

Dans ce but, l'invention propose un agencement du type décrit précédemment, caractérisé en ce qu'il comporte :
- une patte de support, s'étendant dans une fenêtre de la paroi principale, qui porte sur sa face interne le connecteur électrique et qui est susceptible de pivoter, par rapport à la paroi principale, autour d'un axe géométrique d'articulation sensiblement parallèle à la paroi principale, vers l'extérieur du caisson, depuis sa position de repos dans laquelle elle est sensiblement contenue dans le plan de la paroi principale, jusqu'à une position relevée ;
- une plaque, parallèle à la patte de support, formant un couvercle qui est lié à la patte de support et qui est susceptible de s'emboîter dans la fenêtre de la paroi principale, de manière à immobiliser la patte de support dans sa position de repos en fermant la fenêtre, le couvercle comportant au moins une lumière en vue de permettre le passage d'un câble électrique depuis l'extérieur vers l'intérieur du caisson, lorsque la patte de support occupe sa position de repos.

L'agencement selon l'invention permet l'installation du luminaire et son raccordement au réseau électrique par une seule personne, sans qu'il soit nécessaire d'ouvrir le luminaire.

L'invention permet donc de livrer des luminaires dans lesquels les tubes d'éclairage et la grille, ou la vitre, de protection sont déjà montés, ce qui apporte un gain de temps à l'installation non négligeable.

De plus, l'agencement selon l'invention permet de monter au choix un connecteur du type à trois plots ou du type à cinq plots, sans qu'il soit nécessaire de modifier la taille du couvercle ou la taille de la patte de support.

On note aussi que le connecteur est facilement accessible, de l'intérieur comme de l'extérieur du caisson, puisqu'il n'est pas monté à l'intérieur d'un boîtier, ce qui facilite le raccordement électrique et rend l'installation du luminaire plus sûre.

Selon d'autres caractéristiques de l'invention :
- la patte de support comporte une zone déformable, formant charnière d'articulation, qui lui permet de pivoter autour de l'axe d'articulation ;
- la zone déformable est globalement la zone de raccordement entre la patte de support et la paroi principale ;
- le caisson est réalisé en tôle, et la patte de support et la fenêtre sont réalisées par une découpe de la tôle formant la paroi principale, de manière que la patte de support soit en une seule pièce avec la paroi principale ;
- la fenêtre est agencée le long d'une arête de la paroi principale ;
- le couvercle est lié à la patte de support par un assemblage à glissière permettant au couvercle de coulisser par rapport à la patte de support, suivant un axe de coulissement qui est perpendiculaire à l'axe d'articulation, entre une position arrière, ou position déverrouillée, et une position avant, ou position verrouillée ;
- le couvercle comporte au moins un élément de butée axiale qui coopère avec une portion complémentaire du caisson, de manière à empêcher le coulissement axial du couvercle vers l'avant, lorsqu'il occupe sa position verrouillée ;
- la face interne du couvercle porte au moins un ergot de verrouillage qui, lorsque le couvercle occupe sa position verrouillée, est adjacent à la face interne de la paroi principale, de manière à empêcher le pivotement de l'assemblage autour de l'axe d'articulation vers l'extérieur ;
- dans la position verrouillée, une partie de la face interne du couvercle est en appui contre la face externe de la paroi principale du caisson, de manière à empêcher le pivotement de l'assemblage autour de l'axe d'articulation vers l'intérieur ;
- chaque lumière est ouverte vers un bord du couvercle.

D'autres caractéristiques et avantages de l'invention apparaîtront à la lecture de la description détaillée qui suit pour la compréhension de laquelle on se reportera aux dessins annexés dans lesquels :
- la figure 1 est une vue éclatée en perspective qui représente, en vue depuis l'extérieur, un caisson de luminaire comportant l'agencement d'un dispositif de connexion électrique réalisé conformément aux enseignement de l'invention ;
- la figure 2 est une vue similaire à la précédente qui représente une variante de l'agencement selon l'invention ;
- la figure 3 est une vue éclatée agrandie en perspective qui représente l'agencement de la figure 1 ;
- la figure 4 est une vue agrandie en perspective qui représente l'agencement de la figure 1 lorsque l'assemblage du couvercle avec la patte de support occupe sa position ouverte ou relevée ;
- la figure 5 est une vue similaire à la précédente qui représente l'agencement de la figure 1 lorsque l'assemblage occupe sa position fermée et verrouillée ;
- la figure 6 est une vue selon le plan de coupe 6-6 de la figure 5 ;
- la figure 7 est une vue de détail selon le plan de section 7-7 de la figure 5 qui illustre l'ergot de verrouillage du couvercle en position verrouillée ;
- la figure 8 est une vue similaire à celle de la figure 5 qui illustre la manoeuvre de déverrouillage de l'assemblage ;
- la figure 9 est une vue similaire à celle de la figure 6 qui représente l'assemblage dans sa position déverrouillée ;
- la figure 10 est une vue similaire à celle de la figure 8 qui illustre la manoeuvre de connexion externe d'un câble d'alimentation au connecteur de l'agencement de la figure 1 ;
- la figure 11 est une vue similaire à celle de la figure 6 qui représente l'assemblage dans sa position ouverte ou relevée ;
- la figure 12 est une vue similaire à celle de la figure 10 qui illustre le passage du câble dans une lumière du couvercle avant le verrouillage de l'assemblage ;
- la figure 13 est une vue similaire à celle de la figure 8 qui illustre le verrouillage de l'assemblage en position fermée.

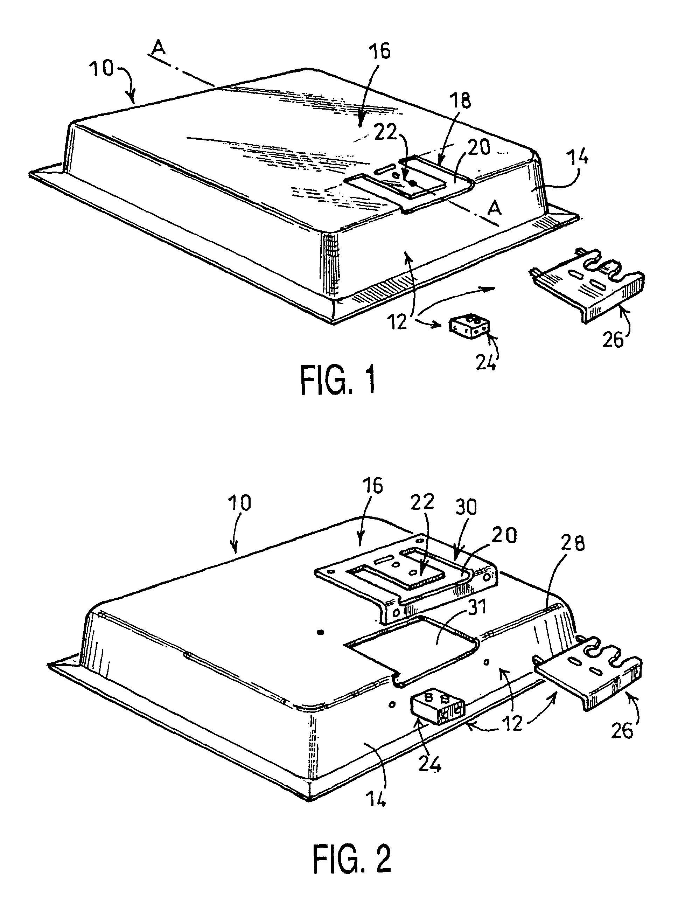

On a représenté sur la figure 1 un caisson 10 de luminaire et les différents éléments de l'agencement 12 du dispositif de connexion électrique selon l'invention.

Dans la suite de la description, on utilisera à titre non limitatif une orientation de haut en bas suivant une direction verticale, en considérant la figure 1.

Le caisson 10 est avantageusement réalisé en tôle et il a globalement une forme parallélépipédique, ses parois latérales 14 étant sensiblement verticales.

Le caisson 10 est ouvert à sa partie inférieure et il est fermé à sa partie supérieure par une paroi principale supérieure horizontale 16 formant le fond du caisson 10.

Conformément aux enseignements de l'invention, la paroi principale 16 comporte une découpe 18 qui délimite une ouverture, ou fenêtre 20, et une patte 22 sensiblement rectangulaire de support pour un connecteur électrique 24.

La patte de support 22 est donc ici réalisée d'une seule pièce par découpe avec la paroi principale 16.

Une plaque rapportée constitue un couvercle 26 qui est prévu pour s'emboîter dans la fenêtre 20.

La fenêtre 20 est ici sensiblement rectangulaire et elle est réalisée de préférence le long d'une arête supérieure 28 du caisson 10.

Selon une variante de réalisation de l'invention, qui est représentée sur la figure 2, la fenêtre 20 et la patte de support 22 peuvent appartenir à une pièce rapportée 30 qui est fixée sur la paroi principale 16 du caisson 10, au-dessus d'une ouverture 31 pratiquée dans la paroi principale 16.

La pièce rapportée 30 peut être réalisée en tôle comme le caisson 10, ou dans un autre matériau tel qu'une matière plastique.

Dans la suite de la description, on utilisera à titre non limitatif une orientation d'avant en arrière suivant un axe longitudinal A-A, contenu dans le plan de la paroi principale 16 et sensiblement orthogonal à l'arête supérieure 28 associée du caisson 10.

L'orientation d'avant en arrière correspond globalement à une orientation de gauche à droite, en considérant la figure 1.

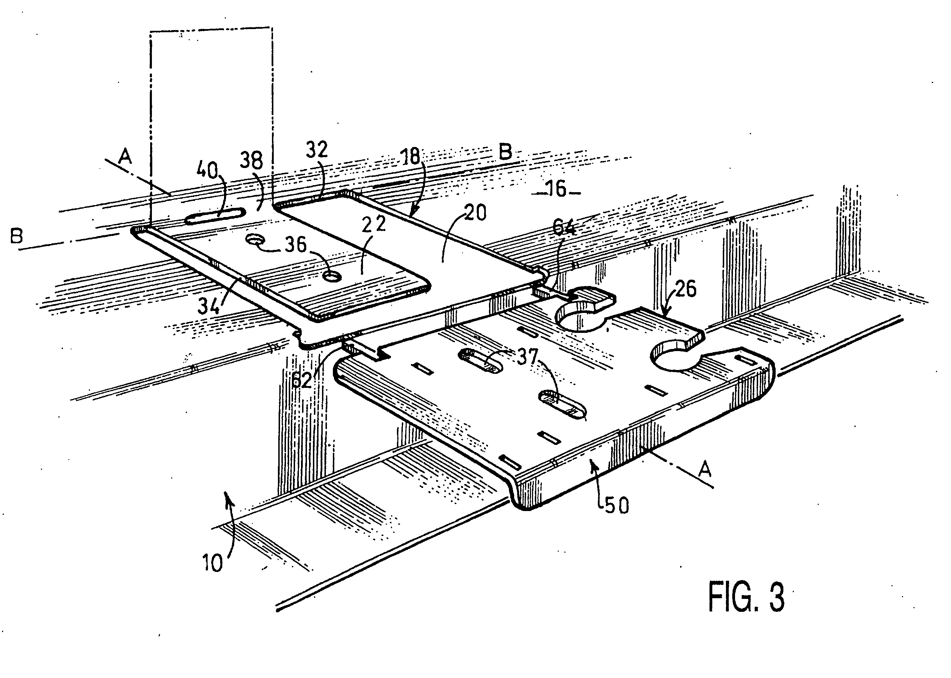

Sur la figure 3, la patte de support 22 est réalisée d'une seule pièce avec la paroi principale 16.

La patte de support 22 est représentée ici en position de repos, c'est-à-dire qu'elle est sensiblement contenue dans le plan de la paroi principale 16.

Dans sa position de repos, la patte de support 22 s'étend vers l'arrière depuis le bord avant 32 de la découpe 18.

La face inférieure 34 de la patte de support 22 est prévue pour porter le connecteur électrique 24. A cet effet, elle comporte ici des trous 36 permettant par exemple la fixation du connecteur 24 par vissage, ou par sertissage à chaud de pions appartenant au corps isolant en matière plastique du connecteur 24.

La patte de support 22 selon l'invention est susceptible de pivoter, vers l'extérieur du caisson 10, ici vers le haut, autour d'un axe d'articulation B-B qui est orthogonal à l'axe longitudinal A-A et qui est contenu globalement dans le plan de la paroi principale 16. L'axe d'articulation B-B est ici sensiblement confondu avec le bord avant 32 de la découpe 18.

A cet effet, la zone de raccordement 38 de la patte de support 22 avec la paroi principale 16 est déformable, de manière à former une charnière d'articulation.

Avantageusement, la patte de support 22 comporte une fente 40, s'étendant le long de l'axe d'articulation B-B, qui diminue la rigidité de la zone de raccordement 38, en vue de faciliter sa déformation autour de l'axe d'articulation B-B.

Les trous 36 et la fente 40 de la patte de support 22 sont réalisés par exemple par usinage, ou lors de l'opération de découpe et de poinçonnage de la tôle constitutive du caisson.

Les traits fantômes de la figure 3 représentent la patte de support 22 dans une position relevée sensiblement à la verticale, qu'elle occupe lorsqu'un opérateur provoque son pivotement vers l'extérieur, autour de son axe d'articulation B-B.

Sur la figure 3, le couvercle 26 est représenté avant son montage sur la patte de support 22.

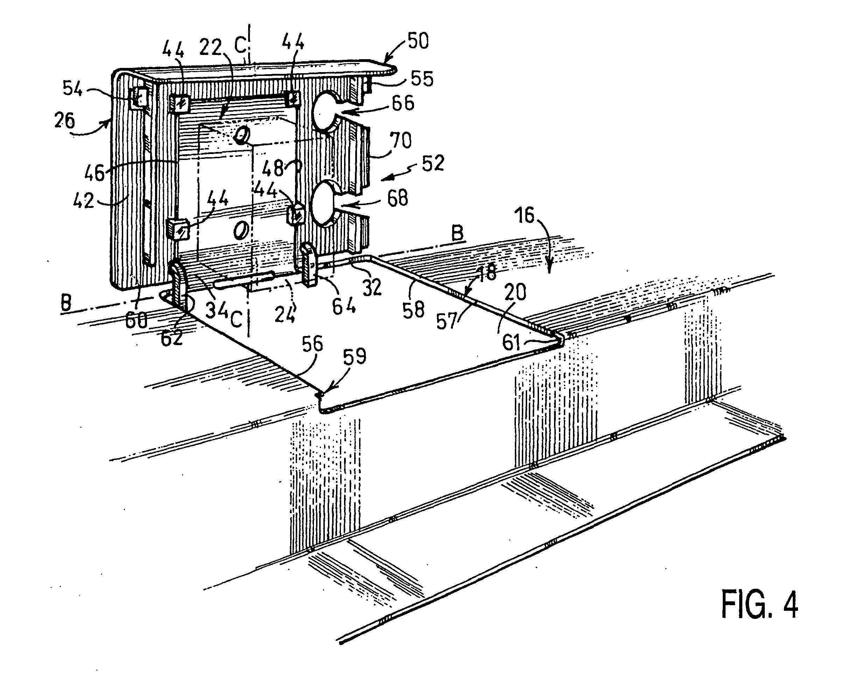

Sur la figure 4, on a représenté le couvercle 26 en position montée sur la patte de support 22, qui occupe sa position relevée.

En traits fantômes on a représenté aussi le connecteur électrique 24 qui est fixé sur la face interne 34 de la patte de support 22.

Avantageusement, le couvercle 26 est monté sur la patte de support 22 par un assemblage coulissant à glissière.

A cet effet, le couvercle 26 comporte sur sa face interne 42 des pattes de guidage 44 en L qui sont alignées le long de chaque bord longitudinal 46, 48 de la patte de support 22 et qui sont recourbées vers la face interne 34 de la patte de support 22.

Dans le mode de réalisation représenté ici, le couvercle 26 comporte deux pattes de guidage 44 sur chaque bord longitudinal 46, 48 de la patte de support 22.

Ainsi, le couvercle 26 est susceptible de coulisser axialement, par rapport à la patte de support 22, suivant un axe de coulissement C-C qui est globalement contenu dans le plan du couvercle 26 et qui est sensiblement orthogonal à l'axe d'articulation B-B. Le couvercle 26 peut coulisser entre une position arrière déverrouillée et une position avant verrouillée du couvercle 26, comme cela sera expliqué par la suite.

Le couvercle 26 comporte aussi un rebord arrière 50 qui est sensiblement orthogonal au plan général du couvercle 26 et qui s'étend vers le bas, en considérant la figure 3.

Le montage du couvercle 26 sur la patte de support 22 s'effectue en faisant coulisser le couvercle 26, suivant l'axe de coulissement C-C, vers l'axe d'articulation B-B, les pattes de guidage 44 étant engagées sur les bords longitudinaux 46, 48 de la patte de support 22.

Il est possible de prévoir au moins un ergot le long d'un des bords de la patte de support 22 pour limiter le déplacement vers l'avant du couvercle 26 par rapport à la patte de support 22.

On note que le couvercle 26 peut-être monté sur la patte de support 22 lorsque celle-ci occupe sa position de repos, comme sur la figure 3, ou lorsqu'elle occupe une position relevée vers l'extérieur, comme sur la figure 4.

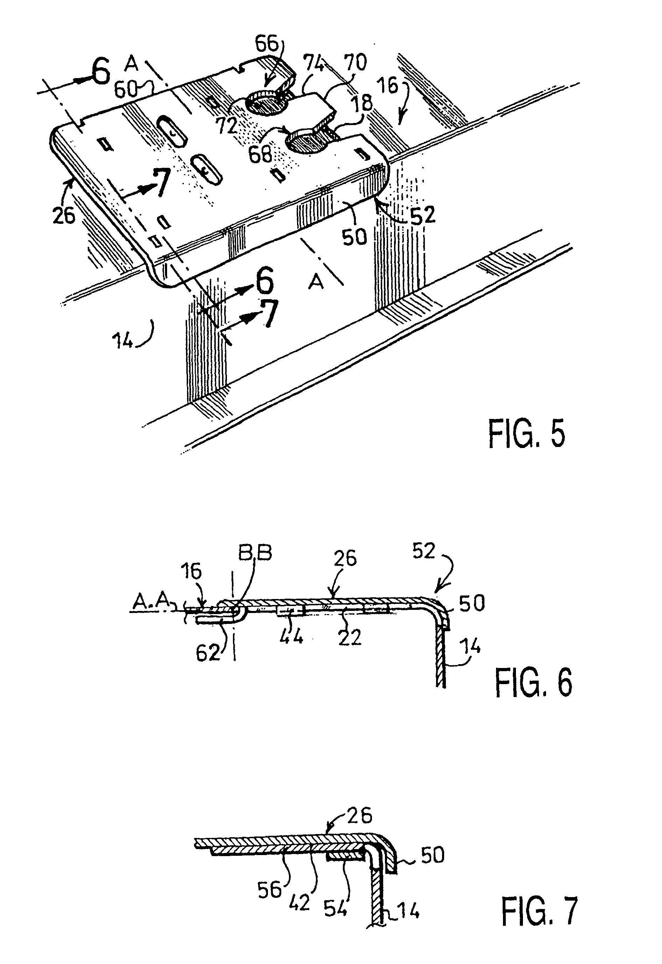

Après le montage du couvercle 26 sur la patte de support 22, on peut placer le couvercle 26 dans sa position dite verrouillée, qui est représentée sur les figures 5 à 7.

Pour refermer la fenêtre 20, si la patte de support 22 occupe une position relevée, on bascule l'assemblage 52, c'est-à-dire le couvercle 26 monté sur la patte de support 22, vers l'intérieur et vers l'arrière, autour de l'axe d'articulation B-B, jusqu'à ce que la patte de support 22 occupe à nouveau sa position de repos, le couvercle 26 faisant ainsi fonction de volet articulé de fermeture de la fenêtre 20.

Ensuite on fait coulisser le couvercle 26 vers l'avant, jusqu'à ce qu'il s'emboîte dans la découpe 18 et qu'il ferme la fenêtre 20.

A cet effet, la face inférieure 42 du couvercle 26 porte deux ergots latéraux 54, 55 de verrouillage qui sont agencés de chaque côté de la patte de support 22 et qui sont prévus pour coopérer avec des encoches 59, 61, réalisées dans la partie avant des bords longitudinaux 56, 57 de la découpe 18, de manière à permettre un verrouillage du type à baïonnette du couvercle 26 dans la fenêtre 20.

Lorsque le couvercle 26 occupe sa position verrouillée et fermée dans la fenêtre 20, les ergots 54, 55 de verrouillage s'étendent alors sous les bords longitudinaux 56, 57 associés de la découpe 18, et ils sont adjacents à la face interne 58 de la paroi principale 16. Les ergots 54, 55 empêchent ainsi le pivotement de l'assemblage 52 autour de l'axe d'articulation B-B, vers l'extérieur.

La figure 7 illustre la position d'un des ergots 54 de verrouillage lorsque le couvercle 26 occupe sa position verrouillée.

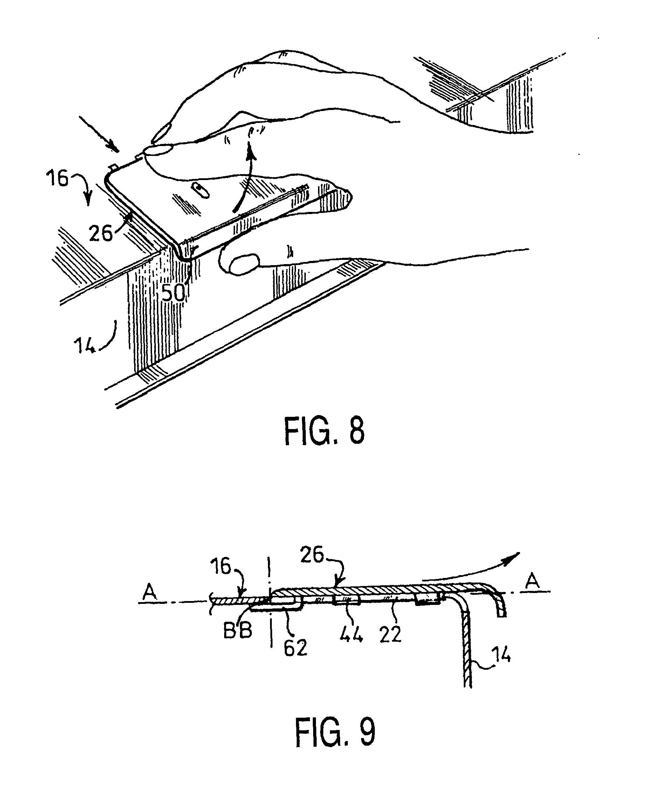

Lorsque le couvercle 26 occupe sa position horizontale et déverrouillée, telle que représentée sur la figure 9, les ergots 54, 55 de verrouillage sont décalés vers l'arrière, par rapport aux encoches 59, 61, ce qui permet à l'assemblage 52 de pivoter autour de l'axe d'articulation B-B, vers l'extérieur.

Le couvercle 26 comporte ici, au voisinage de son bord avant 60, deux ergots 62, 64.

Lorsque le couvercle 26 occupe sa position verrouillée, les deux ergots 62, 64 s'étendent longitudinalement sous le bord avant 32 de la découpe 18 et ils sont adjacents à la face interne 58 de la paroi principale 16, de manière qu'ils retiennent la face interne 42 du couvercle 26 contre la paroi principale 16.

On note que, dans la position verrouillée, le rebord arrière 50 du couvercle 26 est en appui axial A-A vers l'avant contre la paroi latérale 14 du caisson 10. Le rebord arrière 50 forme donc une butée axiale, puisqu'il empêche le couvercle 26 de coulisser plus en avant, suivant l'axe de coulissement A-A.

Le couvercle 26 comporte ici deux lumières 66, 68, d'un côté de la patte de support 22, qui sont ouvertes dans un bord longitudinal 70 du couvercle 26.

Les lumières 66, 68 permettent chacune le passage d'un câble ou fil électrique à travers le couvercle 26 dans sa position verrouillée.

Les deux lumières 66, 68 sont utilisées par exemple lorsque l'on réalise un « repiquage », c'est-à-dire qu'on raccorde électriquement un autre appareil électrique (non représenté) au réseau d'alimentation par l'intermédiaire du connecteur 24 du caisson 10.

Avantageusement, chaque lumière 66, 68 comporte une portion sensiblement circulaire 72, globalement du diamètre du câble électrique, et une portion trapézoïdale 74 qui se rétrécit vers la portion circulaire 72 et qui s'élargit vers le bord longitudinal 70 associé du couvercle 26.

De préférence, le couvercle 26 est réalisé par moulage en matière plastique.

Selon des variantes (non représentées), le couvercle peut être réalisé par usinage et/ou dans un autre matériau.

Avantageusement, le couvercle 26 comporte des trous oblongs 37, orientés suivant une direction parallèle à l'axe de coulissement C-C, qui sont réalisés au-dessus des trous de fixation 36 de la patte de support 22, de manière à permettre l'accès aux vis de fixation (non représentées) du connecteur 24 sur la patte de support 22, quelle que soit la position axiale (C-C) du couvercle 26 par rapport à la patte de support 22.

On décrira maintenant différentes étapes de l'utilisation de l'agencement 12 du dispositif de connexion électrique selon l'invention, en référence aux figures 8 à 13, en vue de réaliser une connexion externe du luminaire.

Avantageusement, le caisson 10 de luminaire est livré avec ses tubes d'éclairage et sa grille de protection (non représentés) montés à l'intérieur.

Le connecteur électrique 24 est déjà raccordé électriquement aux tubes d'éclairage et il est fixé sur la face inférieure 34, ou interne, de la patte de support 22.

Le couvercle 26 est monté sur la patte de support 22 et il occupe sa position fermée et verrouillée, de manière à éviter les risques de détérioration de l'assemblage 52 pendant le transport du caisson 10 préalablement équipé.

L'installateur agence donc le caisson 10 du luminaire dans le plafond prévu pour l'installation.

Comme on l'a représenté sur la figure 8, l'installateur fait alors coulisser le couvercle 26 vers l'arrière, suivant l'axe longitudinal A-A, jusqu'à ce que les ergots latéraux de verrouillage 54, 55 sortent de la fenêtre 20.

Le couvercle 26 occupe alors sa position déverrouillée qui est représentée en coupe à la figure 9.

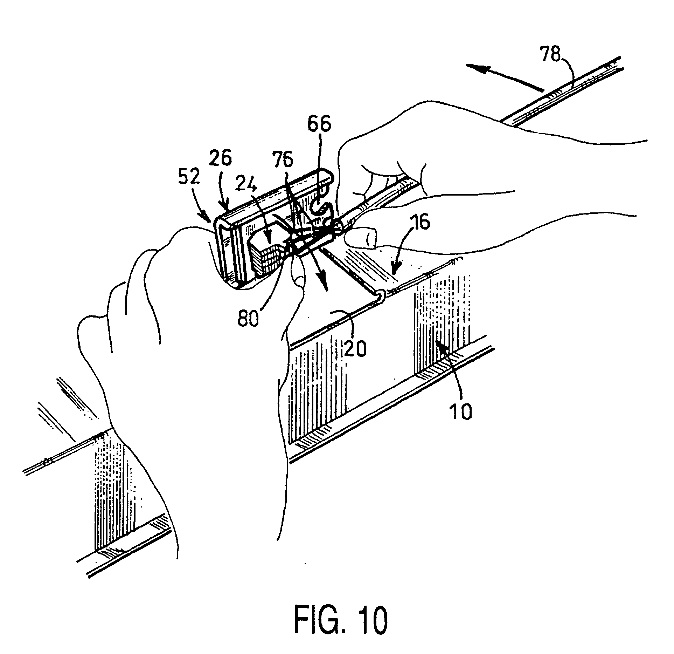

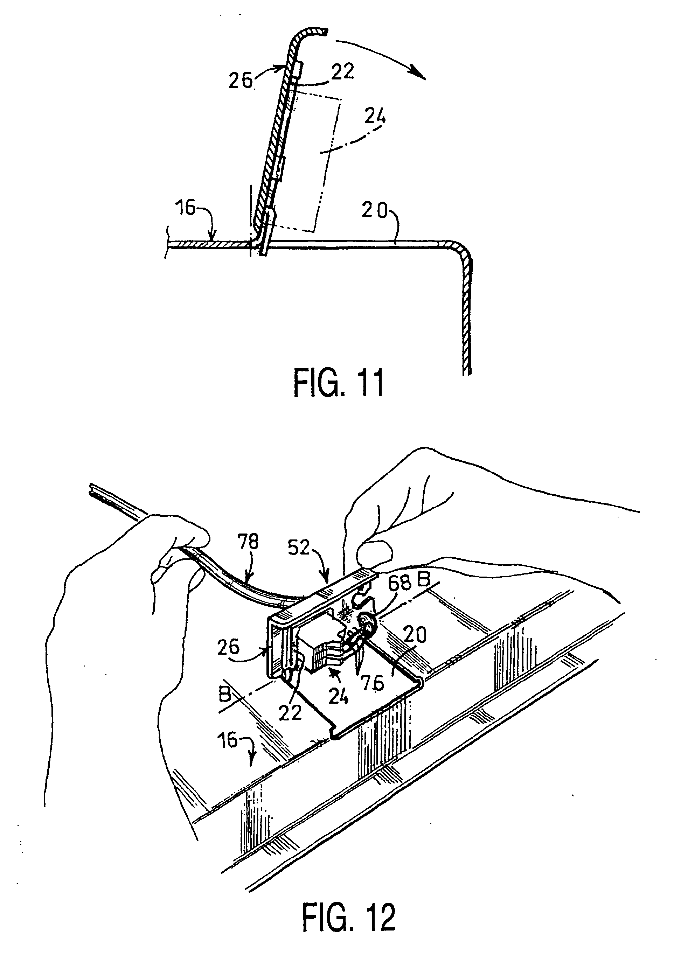

L'installateur peut alors faire pivoter l'assemblage 52 autour de l'axe d'articulation B-B vers l'extérieur, jusqu'à ce qu'il occupe une position relevée, représentée notamment sur les figures 10 et 11, qui permet à l'installateur d'accéder facilement au connecteur 24 par l'extérieur.

L'installateur connecte alors les fils 76 du câble électrique d'alimentation 78 dans les plots 80 du connecteur 24, en maintenant l'extrémité du câble 78 sensiblement en face des plots 80.

Les plots 80 sont orientés ici suivant une direction globalement parallèle à l'axe d'articulation B-B, du côté où le couvercle 26 comporte ses lumières 66, 68, en vue de faciliter le raccordement électrique.

Bien entendu, le connecteur 24 peut aussi être agencé de manière classique, c'est-à-dire décalé de 90°, autour de l'axe de coulissement C-C, par rapport à la position qui est représentée sur les présentes figures, de manière que les plots 80 soient orientés suivant une direction globalement orthogonale au plan général de la patte de support 22, vers l'intérieur du caisson 10 lorsque la patte de support 22 occupe sa position de repos.

Dans le présent mode de réalisation, en considérant par exemple la figure 10, pendant la connexion, l'installateur tient donc le tronçon d'extrémité du câble 78 suivant une direction sensiblement parallèle à l'axe d'articulation B-B, de manière que l'extrémité du câble 78 débouche sensiblement en vis-à-vis des plots 80.

Les manipulations nécessaires pour réaliser la connexion sont facilitées par le fait que le connecteur 24 est facilement accessible puisqu'il n'est pas contenu dans un boîtier et qu'il est maintenu en position par la patte de support 22 qui conserve son orientation verticale pendant la manoeuvre de connexion.

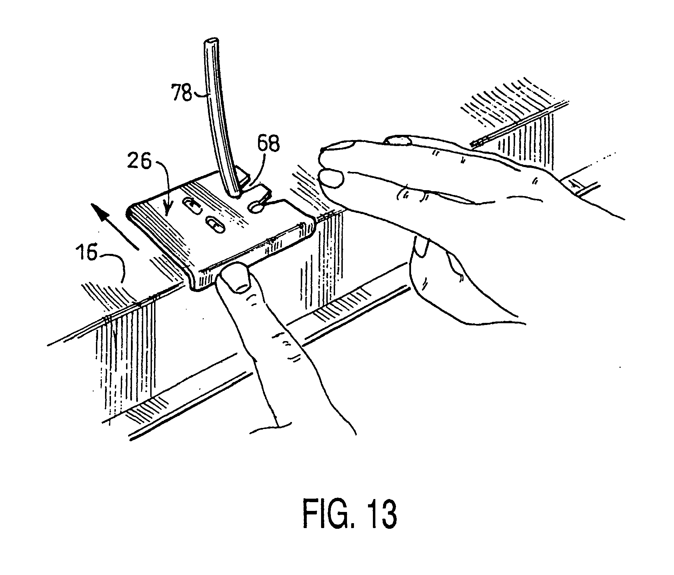

Lorsque la connexion est terminée, l'installateur bascule le câble 78 vers l'avant, de manière à faire passer son tronçon d'extrémité dans une lumière 68 du couvercle 26, tel que représenté sur la figure 13.

Il suffit alors à l'installateur de basculer l'assemblage 52 autour de l'axe d'articulation B-B, vers l'intérieur, de manière que la patte de support 22 occupe à nouveau sa position horizontale de repos, puis à faire coulisser le couvercle 26 vers l'avant, jusqu'à sa position verrouillée.

La connexion du luminaire est alors terminée et il est prêt à fonctionner.

On note que l'agencement 12 selon l'invention permet de réaliser la connexion électrique sans qu'il soit nécessaire de recourber ou de plier le tronçon d'extrémité du câble électrique 78. On ne recourbe le tronçon d'extrémité du câble 78 qu'en vue de la fermeture du couvercle 26, en passant le câble 78 dans une lumière 68 du couvercle 26.

Avantageusement, comme le connecteur 24 est fixé directement sur la patte de support 22 en tôle, qui fait masse, il n'est pas nécessaire de prévoir un fil électrique supplémentaire pour raccorder électriquement le connecteur à la masse.

On constate que le couvercle 26 en matière plastique permet de protéger le câble électrique 78 des arêtes tranchantes de tôle de la découpe 18. En effet, le câble 78 est retenu dans la portion circulaire 72 de la lumière 68, car la lumière 68 s'ouvre vers le bord associé 70 du couvercle 26 par une portion rétrécie 74, de dimension longitudinale sensiblement inférieure au diamètre du câble 78.

Pour réaliser une connexion interne, l'installateur opère de manière classique, comme avec un luminaire comportant un agencement réalisé selon l'état de la technique.

Ainsi, l'installateur démonte la grille de protection et les tubes d'éclairage du caisson 10. II passe ensuite le tronçon d'extrémité du câble électrique 78 d'alimentation dans une lumière 68 du couvercle 26, qui reste dans sa position verrouillée.

Depuis l'intérieur du caisson 10, il raccorde alors chacun des fils 76 du câble 78 à un plot 80 du connecteur 24.

Enfin il remonte les tubes d'éclairage et la grille de protection dans le caisson 10.

## Revendications

1. Agencement (12) d'un dispositif de connexion électrique d'un luminaire, du type dans lequel le luminaire comprend un caisson (10) encastrable, notamment dans un plafond, qui comporte une paroi principale (16) sensiblement plane, un connecteur électrique (24) étant fixé sur la face interne (58) de la paroi principale (16), en vue de permettre le raccordement électrique du luminaire au réseau d'alimentation,
**caractérisé en ce qu'**il comporte :
- une patte de support (22), s'étendant dans une fenêtre (20) de la paroi principale (16), qui porte sur sa face interne (34) le connecteur électrique (24) et qui est susceptible de pivoter, par rapport à la paroi principale (16), autour d'un axe géométrique d'articulation (B-B) sensiblement parallèle à la paroi principale (16), vers l'extérieur du caisson (10), depuis sa position de repos dans laquelle elle est sensiblement contenue dans le plan de la paroi principale (16), jusqu'à une position relevée ;
- une plaque (26), parallèle à la patte de support (22), formant un couvercle qui est lié à la patte de support (22) et qui est susceptible de s'emboîter dans la fenêtre (20) de la paroi principale (16), de manière à immobiliser la patte de support (22) dans sa position de repos en fermant la fenêtre (20), le couvercle (26) comportant au moins une lumière (66, 68) en vue de permettre le passage d'un câble électrique (78) depuis l'extérieur vers l'intérieur du caisson (10), lorsque la patte de support (22) occupe sa position de repos.

2. Agencement (12) selon la revendication précédente, **caractérisé en ce que** la patte de support (22) comporte une zone déformable (38), formant charnière d'articulation, qui lui permet de pivoter autour de l'axe d'articulation (B-B).

3. Agencement (12) selon la revendication précédente, **caractérisé en ce que** la zone déformable (38) est globalement la zone de raccordement entre la patte de support (22) et la paroi principale (16).

4. Agencement (12) selon la revendication précédente, **caractérisé en ce que** le caisson (10) est réalisé en tôle et **en ce que** la patte de support (22) et la fenêtre (20) sont réalisées par une découpe (18) de la tôle formant la paroi principale (16), de manière que la patte de support (22) soit en une seule pièce avec la paroi principale (16).

5. Agencement (12) selon l'une quelconque des revendications précédentes, **caractérisé en ce que** la fenêtre (20) est agencée le long d'une arête (28) de la paroi principale (16).

6. Agencement (12) selon l'une quelconque des revendications précédentes, **caractérisé en ce que** le couvercle (26) est lié à la patte de support (22) par un assemblage à glissière permettant au couvercle (26) de coulisser par rapport à la patte de support (22), suivant un axe de coulissement (C-C) qui est perpendiculaire à l'axe d'articulation (B-B), entre une position arrière, ou position déverrouillée, et une position avant, ou position verrouillée.

7. Agencement (12) selon la revendication précédente, **caractérisé en ce que** le couvercle (26) comporte au moins un élément de butée axiale (50) qui coopère avec une portion complémentaire du caisson (10), de manière à empêcher le coulissement axial du couvercle (26) vers l'avant, lorsqu'il occupe sa position verrouillée.

8. Agencement (12) selon la revendication 6 ou 7, **caractérisé en ce que** la face interne (42) du couvercle (26) porte au moins un ergot de verrouillage (54, 55) qui, lorsque le couvercle (26) occupe sa position verrouillée, est adjacent à la face interne (58) de la paroi principale (16), de manière à empêcher le pivotement de l'assemblage (52) autour de l'axe d'articulation (B-B) vers l'extérieur.

9. Agencement (12) selon l'une quelconque des revendications 6 à 8, **caractérisé en ce que**, dans la position verrouillée, une partie de la face interne (42) du couvercle (26) est en appui contre la face externe de la paroi principale (16) du caisson (10), de manière à fermer la fenêtre (20) et à empêcher le pivotement de l'assemblage (52) autour de l'axe d'articulation (B-B) vers l'intérieur.

10. Agencement (12) selon l'une quelconque des revendications précédentes, **caractérisé en ce que** chaque lumière (66, 68) est ouverte vers un bord (70) du couvercle (26).

11. Luminaire dans lequel le dispositif de connexion électrique est agencé selon l'une quelconque des revendications 1 à 10.

## Claims

1. An arrangement (12) of an electrical connecting device of a lighting fixture, of the type in which the lighting fixture comprises a built-in box (10) more particularly in a ceiling, which comprises a substantially planar main wall (16), an electrical connector (24) which is fixed to the inside surface (58) of the main wall (16) so as to permit the electrical connection of the lighting fixture to the power supply network,
**characterized in that** it comprises:
- a support clip (22) extending in a window (20) of the main wall (16), which carries the electrical connector (24) on its inside surface (34) and which is capable of pivoting relative to the main wall (16) around a geometrical slewing axis (B-B) substantially parallel to the main wall (16) to the outside of the box (10) from its rest position in which it is substantially kept in the plane of the main wall (16) to a raised position;
- a plate (26) parallel to the support clip (22) forming a cover which is connected to the support clip (22) and which can fit in the window (20) of the main wall (16) so as to immobilize the support clip (22) in its rest position by closing the window (20), the cover (26) comprising at least one light (66, 68) so as to permit the passing through of an electrical cable (78) from the outside to the inside of the box (10) when the support clip (22) is in its rest position.

2. An arrangement (12) as claimed in the previous claim, **characterized in that** the support clip (22) comprises a deformable area (38) which forms a hinge which permits of pivoting it around the slewing axis (B-B).

3. An arrangement (12) as claimed in the previous claim, **characterized in that** the deformable area (38) is in aggregate the connecting area between the support clip (22) and the main wall (16).

4. An arrangement (12) as claimed in the previous claim, **characterized in that** the box (10) is made of sheet steel and **in that** the support clip (22) and the window (20) are made from a cutting (18) of the sheet steel forming the main wall (16) in a manner such that the support clip (22) forms a whole with the main wall (16).

5. An arrangement (12) as claimed in any one of the previous claims, **characterized in that** the window (20) is arranged along a rib (28) of the main wall (16).

6. An arrangement (12) as claimed in any one of the previous claims, **characterized in that** the cover (26) is connected to the support clip (22) by means of a slide assembly which permits the cover (26) of sliding relative to the support clip (22) along a sliding axis (C-C) which is perpendicular to the slewing axis (B-B) between a back position, or unlocked position, and a front position, or locked position.

7. An arrangement (12) as claimed in the previous claim, **characterized in that** the cover (26) comprises at least an axial stop element (50) which cooperates with a complementary part of the box (10) so as to impede the axial sliding of the cover (26) to the front when it is in its locked position.

8. An arrangement (12) as claimed in claim 6 or 7, **characterized in that** the inside surface (42) of the cover (26) carries at least a locking pin (54, 55) which, when the cover (26) is in its locked position, is adjacent to the inside surface (58) of the main wall (16) so as to impede the pivoting of the assembly (52) around the slewing axis (B-B) to the outside.

9. An arrangement (12) as claimed in any one of the claims 6 to 8, **characterized in that** in the locked position a part of the inside surface (42) of the cover (26) rests against the outside surface of the main wall (16) of the box (10) so as to close the window (20) and impede the pivoting of the assembly (52) around the slewing axis (B-B) to the inside.

10. An arrangement (12) as claimed in any one of the previous claims, **characterized in that** each light (66, 68) is open to a rim (70) of the cover (26).

11. A lighting fixture in which the electrical connecting device is arranged as claimed in any one of the claims 1 to 10.

## Patentansprüche

1. Anordnung (12) einer elektrischen Anschlussvorrichtung für eine Leuchte, wobei die Leuchte einen insbesondere in eine Decke einbaubaren Kasten (10) umfasst, der eine im Wesentlichen ebene Hauptwand (16) und einen auf der Innenseite (58) der Hauptwand (16) befestigten elektrischen Anschluss (24) aufweist, zum Zweck der elektrischen Verbindung der Leuchte mit dem Stromnetz,
**dadurch gekennzeichnet, dass** sie Folgendes umfasst:
- eine in ein Fenster (20) der Hauptwand (16) ragende Traglasche (22), die auf der Innenfläche (34) den elektrischen Anschluss (24) trägt und in Bezug auf die Hauptwand (16) um eine im Wesentlichen parallel zur Hauptwand (16) verlaufende geometrische Drehachse (B-B) aus ihrer Ruhestellung, in der sie im Wesentlichen in der Ebene der Hauptwand (16) liegt, bis zu einer hochgeklappten Stellung zur Außenseite des Kastens (10) hin geschwenkt werden kann,
- eine parallel zur Traglasche (22) verlaufende Platte (26), die eine Abdeckung bildet, die mit der Traglasche (22) verbunden ist und in das Fenster (20) der Hauptwand (16) hineinpasst, so dass sie die Traglasche (22) in ihrer Ruhestellung fixiert, indem sie das Fenster (20) schließt, wobei die Abdeckung (26) mindestens ein Loch (66, 68) aufweist, das die Durchführung eines elektrischen Kabels (78) von außen in das Innere des Kastens (10) gestattet, wenn sich die Traglasche (22) in ihrer Ruhestellung befindet.

2. Anordnung (12) nach dem vorhergehenden Anspruch, **dadurch gekennzeichnet, dass** die Traglasche (22) einen verformbaren Bereich (38) umfasst, der ein Scharnier bildet, das es ihr gestattet, um die Drehachse (B-B) geschwenkt zu werden.

3. Anordnung (12) nach dem vorhergehenden Anspruch, **dadurch gekennzeichnet, dass** der verformbare Bereich (38) im Ganzen der Verbindungsbereich zwischen der Traglasche (22) und der Hauptwand (16) ist.

4. Anordnung (12) nach dem vorhergehenden Anspruch, **dadurch gekennzeichnet, dass** der Kasten (10) aus Blech besteht und dass die Traglasche (22) und das Fenster (20) durch einen Ausschnitt (18) aus dem die Hauptwand (16) bildenden Blech derart gebildet werden, dass die Traglasche (22) und die Hauptwand (16) aus einem einzigen Stück bestehen.

5. Anordnung (12) nach einem der vorhergehenden Ansprüche, **dadurch gekennzeichnet, dass** das Fenster (20) längs einer Kante (28) der Hauptwand (16) angeordnet ist.

6. Anordnung (12) nach einem der vorhergehenden Ansprüche, **dadurch gekennzeichnet, dass** die Abdeckung (26) mit der Traglasche (22) durch eine Gleitverbindung verbunden ist, die es der Abdeckung (26) gestattet, sich in Bezug auf die Traglasche (22) entlang einer Gleitachse (C-C), die senkrecht zur Drehachse (B-B) steht, zwischen einer hinteren oder entriegelten Stellung in eine vordere oder verriegelte Stellung zu verschieben.

7. Anordnung (12) nach dem vorhergehenden Anspruch, **dadurch gekennzeichnet, dass** die Abdeckung (26) mindestens einen axialen Anschlag (50) umfasst, der mit einem ergänzenden Teil des Kastens (10) derart zusammenwirkt, dass die Abdeckung (26) daran gehindert wird, sich nach vorne zu verschieben, wenn sie sich in der verriegelten Stellung befindet.

8. Anordnung (12) nach Anspruch 6 oder 7, **dadurch gekennzeichnet, dass** sich auf der Innenfläche (42) der Abdeckung (26) mindestens ein Verriegelungsstift (54, 55) befindet, der, wenn die Abdeckung (26) ihre verriegelte Stellung einnimmt, neben der Innenfläche (58) der Hauptwand (16) liegt, so dass die Verbindung (52) nicht um die Drehachse (B-B) nach außen geschwenkt werden kann.

9. Anordnung (12) nach einem der Ansprüche 6 bis 8, **dadurch gekennzeichnet, dass** sich in der verriegelten Stellung ein Teil der Innenfläche (42) der Abdeckung (26) auf der Außenfläche der Hauptwand (16) des Kastens (10) abstützt, so dass das Fenster (20) geschlossen ist und die Verbindung (52) nicht um die Drehachse (B-B) nach innen geschwenkt werden kann.

10. Anordnung (12) nach einem der vorhergehenden Ansprüche, **dadurch gekennzeichnet, dass** jedes Loch (66, 68) zu einem Rand (70) der Abdeckung (26) hin offen ist.

11. Leuchte, in der die elektrische Anschlussvorrichtung nach einem der Ansprüche 1 bis 10 angeordnet ist.
